# EUROPEAN PATENT APPLICATION

(11) **EP 4 567 974 A1**
(43) Date of publication of application: **11.06.2025**
(21) Application number: 24181955.6
(22) Date of filing: 13.06.2024
(51) Int. Cl.: H01M 10/658, H01M 50/342

(54) **BATTERY MODULE AND MANUFACTURING METHOD THEREOF**

(30) Priority: 05.12.2023 KR 20230174430
(71) Applicant: SAMSUNG SDI CO., LTD., Giheung-gu Yongin-si, Gyeonggi-do 17084 (KR)
(72) Inventor: Cho, Man Sik, 16678 Suwon-si, Gyeonggi-do (KR); Kim, Hyun Kook, 16678 Suwon-si, Gyeonggi-do (KR)
(74) Representative: Gulde & Partner

(57) **Abstract**

Disclosed herein is a battery module and a manufacturing method thereof, capable of preventing damage to a vent due to external heat. To this end, the present disclosure includes cases into which one or more electrode assemblies each including a positive electrode and a negative electrode are built, cap covers configured to cover open regions of the cases, terminals assembled to the cap covers through the cap covers and connected to the electrode assemblies, a housing accommodating the cases arranged in a row, and damage prevention portions mounted on the cap covers and configured to prevent damage due to heat.

## Description

### BACKGROUND

### 1. Field of the Invention

Aspects of embodiments of the present disclosure relates to a battery module and a manufacturing method thereof.

### 2. Discussion of Related Art

In general, as the demand for portable electronic products such as laptops, video cameras, and portable phones rapidly increases and robots, electric vehicles, and the like are commercialized in earnest, research on high-performance secondary batteries capable of repeated charging and discharging is actively underway.

Secondary batteries are widely used for driving or storing energy in small devices such as portable electronic devices, as well as medium to large-sized devices such as electric vehicles and energy storage systems (ESS). In particular, in the case of medium to large-sized devices, a battery module may be constituted by a plurality of battery cells electrically connected to each other to improve output and/or capacity of a battery.

Battery modules in the related art maintain durability by applying a certain level of surface pressure to battery cells through a housing structure installed to surround the battery cells. However, in the structure, when a swelling phenomenon in which a battery cell expands due to rapid charging, overcharging, over-discharging, short circuit, or high temperature occurs, the pressure acting between the battery cell and the housing continuously increases, and thus deterioration of the battery cell may be accelerated.

The above-described information disclosed in the technology that forms the background of the present disclosure is only provided to improve understanding of the background of the present disclosure, and thus may include information that does not constitute the related art.

### SUMMARY OF THE INVENTION

An aspect of embodiments of the present disclosure is directed to providing a battery module capable of preventing heat from spreading and damaging a normal battery cell when an event occurs and a manufacturing method thereof.

These and other aspects and features of the present disclosure will be described in or will be apparent from the following description of some embodiments of the present disclosure.

According to an aspect of the present invention, there is provided a battery module including cases into which one or more electrode assemblies each including a positive electrode and a negative electrode are built, cap covers configured to cover open regions or openjgs of the cases, terminals assembled to the cap covers through the cap covers and connected to the electrode assemblies, a housing accommodating the cases arranged in a row, and damage prevention portions mounted on the cap covers and configured to prevent damage due to heat.

The cap cover may include a cap plate coupled to the case and configured to cover the open region or openjgs of the case and a vent formed in the cap plate and opened when an internal pressure of the case rises above a set value.

The damage prevention portion may protect the vent from external heat.

The damage prevention portion may include an insulating pad made of an insulating material and covering the vent and a fixing pad mounted on the cap plate and configured to fix the insulating pad.

A pad cut portion cuttable by gas discharged from the vent may be formed in the insulating pad.

The fixing pad may cover the insulating pad, and may be attached to the cap plate.

The fixing pad may include a fixing tape covering the insulating pad and attached to the cap plate and a fixing cutting line formed on the fixing tape so that the insulating pad attached to the fixing tape is separated from the fixing tape.

The fixing pad may include a fixing adhesive portion covering the insulating pad and attached to the cap plate and a fixing cut portion formed in the fixing adhesive portion so that the insulating pad attached to the fixing adhesive portion is partially cut.

The insulating pad may be fixed by mounting the fixing pad on the cap plate in a state in which the insulating pad is seated in the vent.

The fixing pad may be mounted on the cap plate in a state in which the insulating pad is attached to the fixing pad.

According to a first embodiment of the present invention, there is provided a manufacturing method of a battery module, the manufacturing method including a cell assembly operation of coupling cases and cap covers, a cell mounting operation of mounting the cases on a housing, and a protection operation of mounting damage prevention portions on the cap covers to prevent damage to the cap covers due to heat.

In the protection operation, an insulating pad may cover a vent formed in the cap cover, and a fixing pad may cover the insulating pad by being coupled to the cap cover.

A pad cut portion cuttable by gas discharged from the vent may be formed in the insulating pad.

The fixing pad may cover the insulating pad, be attached to the cap cover, and have a fixing cut portion formed thereon so that the insulating pad is induced to be partially cut.

The fixing pad may be separated from the insulating pad by being cut by gas discharged from the vent.

The insulating pad may be fixed by attaching the fixing pad to the cap cover in a state in which the insulating pad is seated in the vent.

The fixing pad may be mounted on the cap cover in a state in which the insulating pad is attached to the fixing pad.

One fixing pad may be disposed to cross the cap covers arranged in a row and attached to the plurality of cap covers.

A plurality of fixing pads may be attached to the plurality of cap covers arranged in a row, respectively.

According to a second embodiment of the present invention, there is provided a manufacturing method of a battery module, the manufacturing method including a cell assembly operation of assembling a battery cell in which a case and a cap cover are coupled, a protection operation of mounting a damage prevention portion on the cap cover to prevent damage to the cap cover due to external heat, and a cell mounting operation of mounting a plurality of battery cells on a housing.

However, the effects obtainable through the present disclosure are not limited to the above effects, and other technical effects that are not mentioned will be clearly understood by those skilled in the art from the following description of the present disclosure.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings:
FIG. 1 is a perspective view schematically illustrating a battery module according to one embodiment of the present invention;
FIG. 2 is a cross-sectional view schematically illustrating the battery module according to one embodiment of the present invention;
FIG. 3 is a view schematically illustrating a state in which a damage prevention portion is attached to a cap cover according to one embodiment of the present invention;
FIG. 4 is a view schematically illustrating a pad cut portion according to one embodiment of the present invention;
FIG. 5 is a view schematically illustrating a fixing pad according to a first embodiment of the present invention;
FIG. 6 is a view schematically illustrating a fixing pad according to a second embodiment of the present invention;
FIG. 7 is a flowchart schematically illustrating a manufacturing method of a battery module according to a first embodiment of the present invention;
FIG. 8 is a view schematically illustrating a state in which a fixing pad is attached to a cap plate after an insulating pad is seated in a vent according to one embodiment of the present invention;
FIG. 9 is a view schematically illustrating a state in which a fixing pad is coupled to a cap plate in a state in which an insulating pad is attached to the fixing pad according to one embodiment of the present invention;
FIG. 10 is a view schematically illustrating a manner in which the fixing pad according to the first embodiment of the present invention is coupled to a plurality of cap covers;
FIG. 11 is a view schematically illustrating a manner in which the fixing pad according to the second embodiment of the present invention is coupled to a plurality of cap covers; and
FIG. 12 is a flowchart schematically illustrating a manufacturing method of a battery module according to the second embodiment of the present invention.

### DETAILED DESCRIPTION OF EXEMPLARY EMBODIMENTS

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of' and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

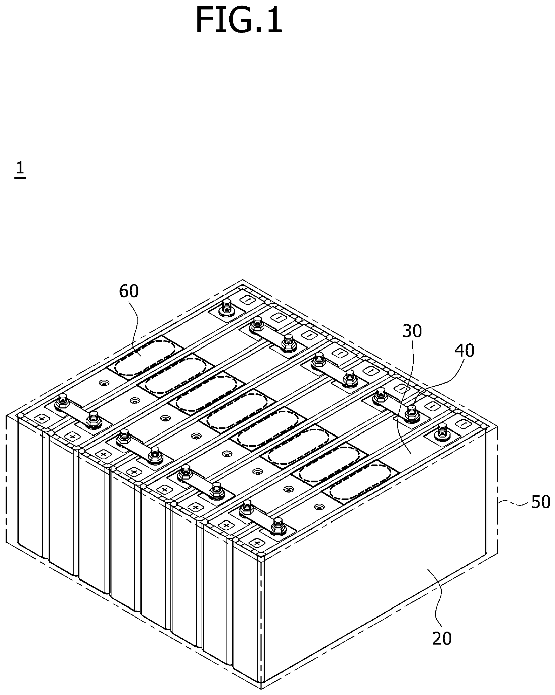

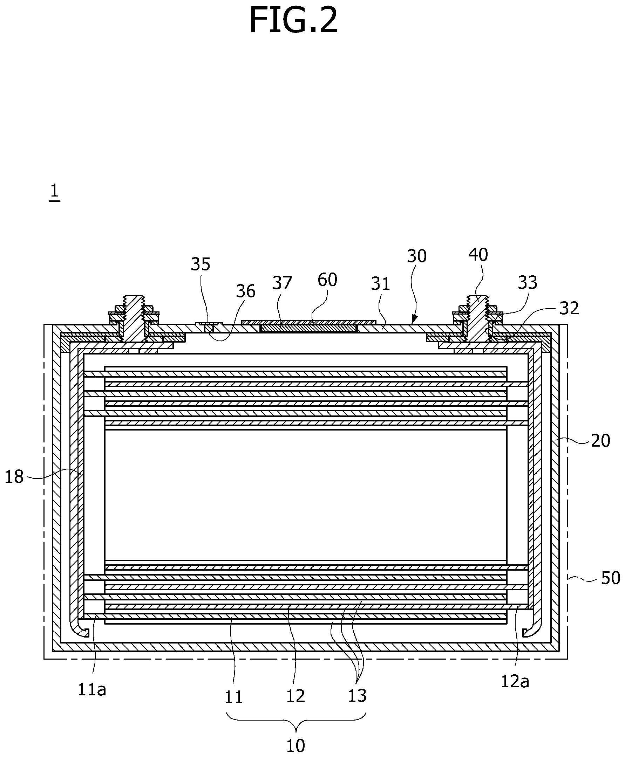

FIG. 1 is a perspective view schematically illustrating a battery module according to one embodiment of the present invention, and FIG. 2 is a cross-sectional view schematically illustrating the battery module according to one embodiment of the present invention. Referring to FIGS. 1 and 2, a battery module 1 according to one embodiment of the present invention may include cases 20, cap covers 30, terminals 40, a housing 50, and damage prevention portions 60.

In an embodiment, one or more electrode assemblies 10 may be wound with a separator 13, which is an insulator, interposed between a positive electrode 11 and a negative electrode 12. The positive electrode 11 and the negative electrode 12 may include a coated portion, which is a region where a current collector formed of a thin metal foil is coated with an active material, and uncoated portions 11a and 12a, which are regions that are not coated with the active material. The positive electrode 11 and the negative electrode 12 may be wound after interposing the separator 13, which is an insulator, therebetween. However, the present invention is not limited thereto, and the electrode assembly 10 may have a structure in which positive electrodes and negative electrodes composed of a plurality of sheets are alternately stacked with a separator interposed therebetween.

The electrode assembly 10 may be built into or housed in each of the cases 20. The cases 20 may form an overall exterior of a battery module, and may be made of a conductive metal such as aluminum, an aluminum alloy, or nickel-plated steel. In an embodiment, the case 20 may have an open upper side and provide a space in which the electrode assembly 10 is accommodated.

The cap cover 30 may cover an open region or opening of the case 20. In an embodiment, the cap cover 30 may be coupled to an upper side of the case 20 and may cover the open region or opening of the case 20. The cap cover 30 in contact with the case 20 may be made of a conductive material.

Each of the terminals 40 may be assembled to the cap cover 30 and extend through the cap cover 30. The terminal 40 may be connected to the electrode assembly 10. The terminal 40 may pass through the cap cover 30, but the lower portion thereof may be built into the case 20 and in contact with the electrode assembly 10, and the upper portion may protrude out of the case 20.

The housing 50 may accommodate the cases 20 arranged in a row. The housing 50 may be formed to have a space allowing a plurality of cases 20 arranged in a row to be inserted therein. In an embodiment, the housing 50 may be coupled to bottom and side surfaces of the cases 20 arranged in a row, and thus modularity may be implemented.

The damage prevention portion 60 may be mounted on the cap cover 30, and may prevent or substantially prevent damage due to external heat. The damage prevention portion 60 may be attached to the cap cover 30, and may be configured to suppress heat conduction through the cap cover 30 even when a fire occurs in a neighboring battery cell.

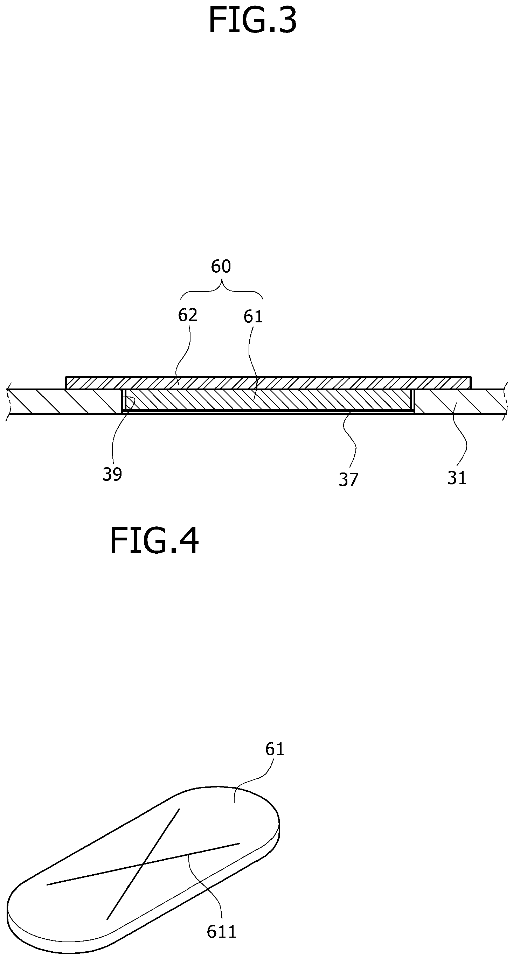

FIG. 3 is a view schematically illustrating a state in which a damage prevention portion is attached to a cap cover according to one embodiment of the present invention, and FIG. 4 is a view schematically illustrating a pad cut portion according to one embodiment of the present invention. Referring to FIGS. 2 to 4, the cap cover 30 according to one embodiment of the present invention may include a cap plate 31 and a vent 37.

The cap plate 31 may be made of a thin plate and coupled to an opening of the case 20. An electrolyte injection hole 36 into which a sealing stopper 35 may be installed may be formed in the cap plate 31.

The vent 37 may be opened and closed in conjunction with changes in internal pressure of the case 20. That is, the vent 37 may remain in a closed state and seal the case 20 during normal operation of the electrode assembly 10. The vent 37 may open as the internal pressure of the case 20 rises above a set pressure value such as due to overcharging or fire and discharge emissions such as flame and gas from the inside of the case 20 to the outside of the case 20. A vent hole 39 may be formed in the cap plate 31, and the vent 37 may be formed in the vent hole 39.

The cap hole 32 may be formed in the cap plate 31 and allow the terminal 40 to pass therethrough. Two cap holes 32 may be formed in the cap plate 31 to allow positive electrode and negative electrode terminals 40 to pass therethrough, respectively. The cap hole 32 may be formed through additional processing of the molded cap plate 31. In an embodiment, the cap hole 32 may be generated while molding the cap plate 31.

The cap protrusion 33 may be formed on the cap plate 31 and may protrude around the cap hole 32. The cap hole 32 has a circular band shape in cross section to suppress inflow of foreign substances through the cap hole 32.

The damage prevention portion 60 may protect the vent 37 from external heat. That is, the damage prevention portion 60 may prevent or substantially prevent damage to the vent 37 due to external heat by covering the vent 37 during normal operation of the electrode assembly 10. Meanwhile, when the internal pressure of the case 20 rises above the set pressure value such as due to overcharging or fire, the damage prevention portion 60 may be cut or separated from the cap plate 31 so that the vent 37 is opened.

More specifically, the damage prevention portion 60 may include an insulating pad 61 and a fixing pad 62. The insulating pad 61 may cover the vent 37, and may be made of an insulating material. The insulating pad 61 may cover only the vent 37 or may cover a peripheral surface of the vent 37. The insulating pad 61 may be inserted into a vent hole 39 and seated in the vent 37. The fixing pad 62 may be mounted on the cap plate 31, and may fix the insulating pad 61. The fixing pad 62 may support the insulating pad 61 when the internal pressure of the case 20 is lower than the set pressure value. The fixing pad 62 may release the restraint on the insulating pad 61 such that the vent 37 is opened when the internal pressure of the case 20 is higher than the set pressure value.

The insulating pad 61 may have a pad cut portion 611 that is cuttable by the pressure discharged from the vent 37. The pad cut portion 611 may have an X-shape or a straight shape to allow gas to be discharged.

The fixing pad 62 may cover the insulating pad 61, and may be attached to the cap plate 31. A central portion of the fixing pad 62 may cover an entire upper side of the insulating pad 61, and an edge portion thereof may be coupled to the cap plate 31.

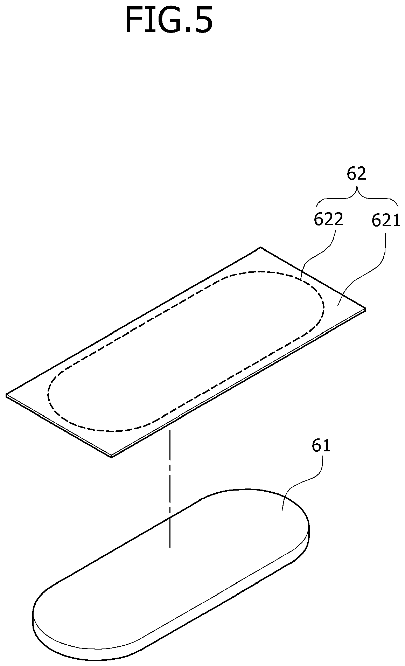

FIG. 5 is a view schematically illustrating a fixing pad according to a first embodiment of the present invention. Referring to FIG. 5, a fixing pad 62 according to the first embodiment of the present invention may include a fixing tape 621 and a fixing cutting line 622.

The fixing tape 621 may cover the insulating pad 61, and may be attached to the cap plate 31. The fixing tape 621 may have an adhesive material formed on its bottom surface, and may be bonded to the cap plate 31.

The fixing cutting line 622 may be formed on the fixing tape 621. The fixing cutting line 622 may form a cutting line so that the insulating pad 61 attached to the fixing tape 621 is separated from the fixing tape 621. The fixing cutting line 622 may be formed along a perimeter of the insulating pad 61, and the pad cut portion 611 may be omitted. The fixing cutting line 622 and the insulating pad 61 attached to the inside of the fixing cutting line 622 may be separated from the fixing tape 621 by gas discharged through the vent 37.

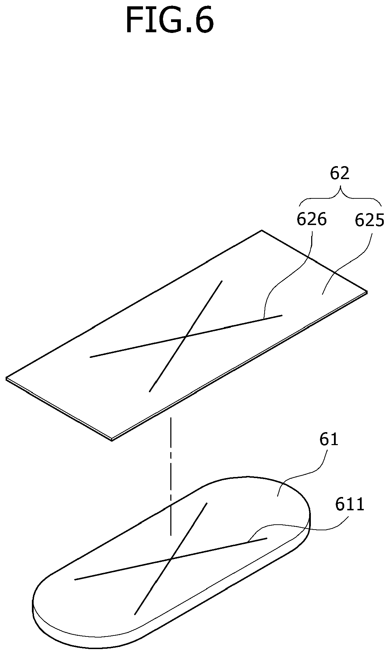

FIG. 6 is a view schematically illustrating a fixing pad according to a second embodiment of the present invention. Referring to FIG. 6, a fixing pad 62 according to the second embodiment of the present invention may include a fixing adhesive portion 625 and a fixing cut portion 626.

The fixing adhesive portion 625 may cover the insulating pad 61, and may be attached to the cap plate 31. The fixing adhesive portion 625 may have an adhesive material applied to its bottom surface, and may be bonded to the cap plate 31.

The fixing cut portion 626 may be formed in the fixing adhesive portion 625. The fixing cut portion 626 may induce the insulating pad 61 attached to the fixing adhesive portion 625 to be partially cut. The fixing cut portion 626 may have a shape corresponding to the pad cut portion 611, and may be disposed to face the pad cut portion 611.

The insulating pad 61 may be fixed by mounting the fixing pad 62 on the cap plate 31 in a state in which the insulating pad 61 is seated in an upper portion of the vent 37. In an embodiment, the fixing pad 62 may be mounted on the cap plate 31 in a state in which the insulating pad 61 is attached to the fixing pad 62.

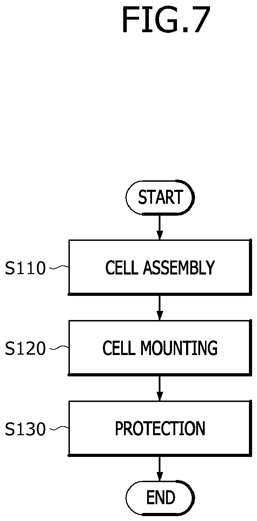

FIG. 7 is a flowchart schematically illustrating a manufacturing method of a battery module according to a first embodiment of the present invention. Referring to FIG. 7, the manufacturing method of a battery module according to the first embodiment of the present invention may include a cell assembly operation (S110), a cell mounting operation (S120), and a protection operation (S130).

In the cell assembly operation (S110), the case 20 and the cap cover 30 may be coupled. The electrode assembly 10 and electrolyte may be input into the case 20, the cap cover 30 may be mounted on the top of the case 20, and an upper open region or opening of the case 20 may be closed. The vent 37 for guiding gas to be discharged when the internal pressure of the case 20 increases may be formed in the cap cover 30.

In the cell mounting operation (S120), a plurality of cases 20 may be mounted on the housing 50. The housing 50 may accommodate the cases 20 arranged in a row. The housing 50 may cover bottom and side surfaces of the plurality of cases 20 arranged in a row.

In the protection operation (S130), the damage prevention portion 60 may be mounted on the cap cover 30 to prevent or substantially prevent damage to the cap cover 30 due to external heat. The damage prevention portion 60 may include the insulating pad 61 and the fixing pad 62. The damage prevention portion 60 may cover the vent 37, and may be opened when the pressure inside the case 20 increases abnormally so that gas is allowed to be discharged through the vent 37.

In the protection operation (S130), the insulating pad 61 may cover the vent 37 formed in the cap cover 30, and the fixing pad 62 may cover the insulating pad 61 by being coupled to the cap cover 30.

The pad cut portion 611 capable of being cut by the pressure of the gas discharged through the vent 37 may be formed in the insulating pad 61 (see FIG. 4).

The fixing pad 62 may cover the insulating pad 61, and may be attached to the cap cover 30. The fixing cut portion 626 may be formed in the fixing pad 62 so that partial cutting of the insulating pad 61 is induced. The fixing cut portion 626 may have the same shape as the pad cut portion 611, and may be disposed to face the pad cut portion (see FIG. 6).

In an embodiment, the fixing pad 62 may be cut and separated from the insulating pad 61 by the pressure of the gas discharged from the vent 37. The fixing pad 62 may include the fixing tape 621 attached to the cap plate 31 and the fixing cutting line 622 formed on the fixing tape 621. The fixing cutting line 622 may correspond to the insulating pad 61, or may form a cut line larger than the insulating pad 61. The insulating pad 61 may be disposed inside the fixing cutting line 622. When the gas is discharged from the vent 37, the fixing cutting line 622 and the insulating pad 61 may be separated from the fixing tape 621, and thus the vent 37 may be opened.

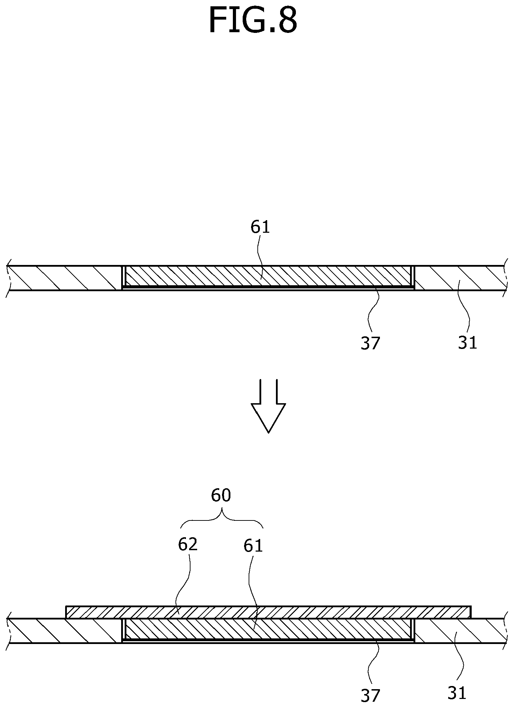

FIG. 8 is a view schematically illustrating a state in which a fixing pad is attached to a cap plate after an insulating pad is seated in a vent according to one embodiment of the present invention. Referring to FIG. 8, first, an insulating pad 61 may cover a vent 37 by being seated in the vent 37. Then, a fixing pad 62 may fix the insulating pad 61 by being attached to a cap plate 31 of a cap cover 30. Since an adhesive may be attached to the insulating pad 61, the insulating pad 61 may be attached to the surface of the vent 37.

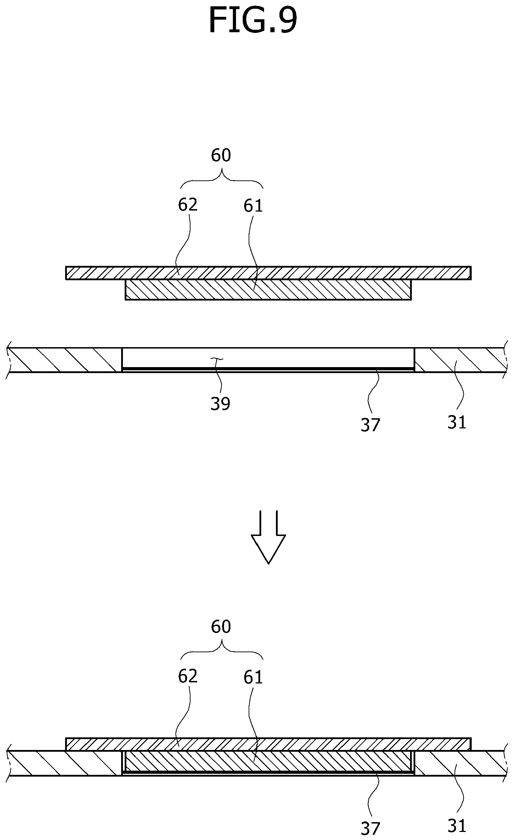

FIG. 9 is a view schematically illustrating a state in which a fixing pad is coupled to a cap plate in a state in which an insulating pad is attached to a fixing pad according to one embodiment of the present invention. Referring to FIG. 9, first, an insulating pad 61 may be attached to a fixing pad 62. An adhesive may be attached to the fixing pad 62, and the insulating pad 61 may be attached to a central portion of the fixing pad 62. As one example, the insulating pad 61 may be attached to a fixing cutting line 622. When the insulating pad 61 is attached to the fixing pad 62, the fixing pad 62 may be attached to a cap plate 31 of a cap cover 30. In this case, the insulating pad 61 may cover a vent 37.

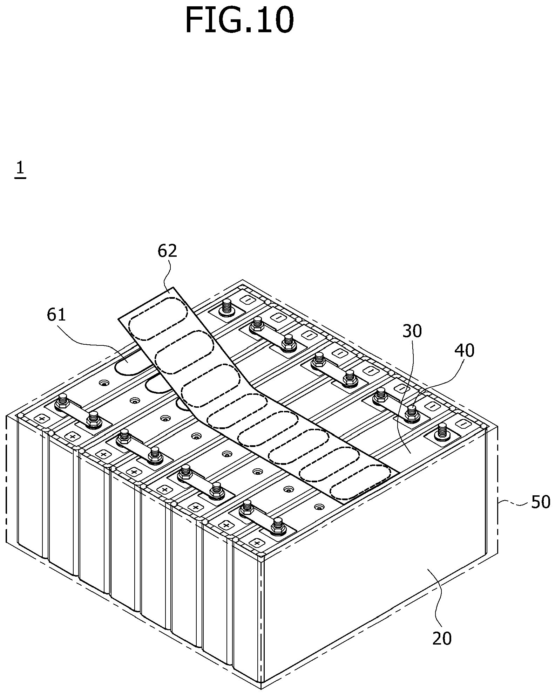

FIG. 10 is a view schematically illustrating a manner in which the fixing pad according to the first embodiment of the present invention is coupled to a plurality of cap covers. Referring to FIG. 10, one fixing pad 62 may be disposed to cross a plurality of cap covers 30 arranged in a row and attached to the cap covers 30. When eight cases 20 are accommodated in the housing 50, eight cap covers 30 covering respective cases 20 may be arranged in a row. In the above state, one fixing pad 62 may have a length enough to cross the eight cap covers 30. One fixing pad 62 may be attached to the cap covers 30 while covering the eight insulating pads 61 seated on the respective cap covers 30. In an embodiment, eight insulating pads 61 may be attached to one fixing pad 62, and when the fixing pad 62 is attached to the eight cap covers 30, each insulating pad 61 may cover its corresponding vent 37.

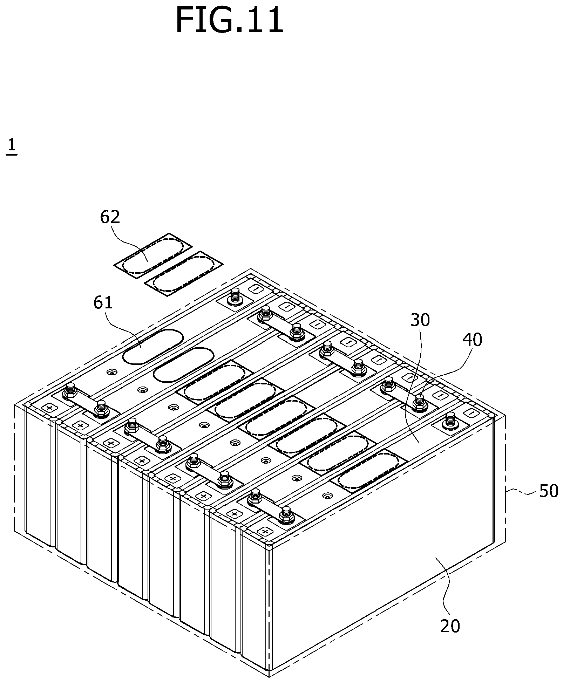

FIG. 11 is a view schematically illustrating a manner in which the fixing pad according to the second embodiment of the present invention is coupled to a plurality of cap covers. Referring to FIG. 11, a plurality of fixing pads 62 may be respectively attached to a plurality of cap covers 30 arranged in a row. When eight cases 20 are accommodated in the housing 50, eight cap covers 30 covering respective cases 20 may be arranged in a row. In the above state, the eight fixing pads 62 may have a length enough to be attached to the respective cap covers 30. The eight fixing pads 62 may be attached to the cap covers 30 while covering eight insulating pads 61 seated on each of the cap covers 30. In an embodiment, the eight insulating pads 61 may be attached to the respective eight fixing pads 62, and when the fixing pads 62 are attached to the respective eight cap covers 30, each insulating pad 61 may cover its corresponding vent 37.

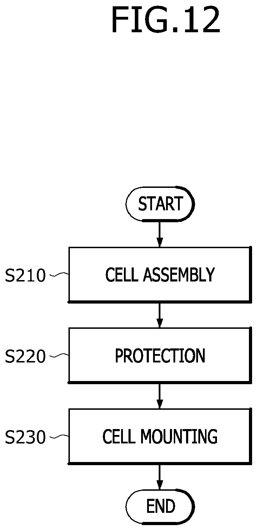

FIG. 12 is a flowchart schematically illustrating a manufacturing method of a battery module according to a second embodiment of the present invention. Referring to FIG. 12, the manufacturing method of a battery module according to the second embodiment of the present invention may include a cell assembly operation (S210), a protection operation (S220), and a cell mounting operation (S230).

In the cell assembly operation (S210), the case 20 and the cap cover 30 may be coupled. The electrode assembly 10 and electrolyte may be input into the case 20, the cap cover 30 may be mounted on the top of the case 20, and an upper open region or opening of the case 20 may be closed. The vent 37 for guiding gas to be discharged when the internal pressure of the case 20 increases may be formed in the cap cover 30.

In the protection operation (S220), the damage prevention portion 60 may be mounted on the cap cover 30 to prevent or substantially prevent damage to the cap cover 30 due to external heat. The damage prevention portion 60 may include the insulating pad 61 and the fixing pad 62. The damage prevention portion 60 may cover the vent 37, and may be opened when the pressure inside the case 20 increases abnormally so that gas is allowed to be discharged through the vent 37. Meanwhile, since the method of mounting the damage prevention portion 60 to the cap cover 30 in the manufacturing method of a battery module according to the second embodiment of the present invention corresponds to the method of mounting the damage prevention portion 60 on the cap cover 30 in the manufacturing method of a battery module according to the first embodiment of the present invention, a detailed description thereof will be omitted.

In the cell mounting operation (S230), a plurality of cases 20 may be mounted on the housing 50. The housing 50 may accommodate the cases 20 arranged in a row. The housing 50 may cover bottom and side surfaces of the plurality of cases 20 arranged in a row.

In a battery module and a manufacturing method thereof according to an embodiment of the present invention, a damage prevention portion can be mounted on a cap cover, thereby preventing or substantially preventing damage to a vent due to external heat.

In the battery module and the manufacturing method thereof according to one or more embodiments of the present invention, an insulating pad may cover the vent, thereby preventing or substantially preventing damage to the vent due to external heat, and a fixing pad that covers the insulating pad can be attached to the cap cover, thereby fixing the insulating pad.

In the battery module and the manufacturing method thereof according to one or more embodiments of the present invention, the damage prevention portion may open the vent by gas discharged through the vent when an abnormal pressure occurs inside a case.

According to another aspect of the present invention, a battery pack manufactured using a battery with an improved structure and a vehicle including the same can be provided.

While the present disclosure has been described with reference to embodiments shown in the drawings, these embodiments are merely illustrative and it should be understood that various modifications and equivalent other embodiments can be derived by those skilled in the art on the basis of the embodiments.

## Claims

1. A battery module (1) comprising:
cases (20) in which one or more electrode assemblies (10) each comprising a positive electrode (11) and a negative electrode (12) are respectively housed;
cap covers (30) configured to cover openings of the cases (20);
terminals (40) assembled to the cap covers (30) and extending through the cap covers (30) and connected to the electrode assemblies (10);
a housing (50) accommodating the cases (20) arranged in a row; and
damage prevention portions (60) mounted on the cap covers (30) and configured to prevent damage due to heat.

2. The battery module (1) as claimed in claim 1, wherein each of the cap covers (30) comprises:
a cap plate (31) coupled to the case (20) and configured to cover the openings of the case (20); and
a vent (37) formed in the cap plate (31) and configured to be opened when an internal pressure of the case (20) rises above a set pressure value.

3. The battery module (1) as claimed in claim 1 or 2, wherein each of the damage prevention portions (60) covers the vent (37) in normal operation conditions and/or is configured to be cut or separated from the cap plate (31) so that the vent (37) is opened when an internal pressure of the case (20) rises above a set pressure value.

4. The battery module (1) as claimed in claim 2 or 3, wherein each of the damage prevention portions (60) is configured to protect the vent (37) from external heat.

5. The battery module (1) as claimed in any one of claims 2 to 4, wherein the damage prevention portion (60) comprises:
an insulating pad (61) comprising an insulating material and covering the vent (37); and
a fixing pad (62) mounted on the cap plate (31) and configured to fix the insulating pad (61).

6. The battery module (1) as claimed in claim 5, wherein a pad cut portion (611) cuttable by gas discharged from the vent (37) is formed in the insulating pad (61).

7. The battery module (1) as claimed in claims 5 or 6, wherein the fixing pad (62) covers the insulating pad (61) and is attached to the cap plate (31).

8. The battery module (1) as claimed in one of the claims 5 to 7, wherein the fixing pad (62) comprises:
a fixing tape (621) covering the insulating pad (61) and attached to the cap plate (31); and
a fixing cutting line (622) formed on the fixing tape (621) such that the insulating pad (61) attached to the fixing tape (621) is separated from the fixing tape (621).

9. The battery module (1) as claimed in one of the claims 5 to 7, wherein the fixing pad (62) comprises:
a fixing adhesive portion (625) covering the insulating pad (61) and attached to the cap plate (31); and
a fixing cut portion (626) formed in the fixing adhesive portion (625) such that the insulating pad (61) attached to the fixing adhesive portion (625) is partially cut.

10. The battery module (1) as claimed in any one of claims 5 to 9, wherein the insulating pad (61) is fixed by mounting the fixing pad (62) on the cap plate (31) in a state in which the insulating pad (61) is seated in the vent (37).

11. The battery module (1) as claimed in any one of claims 5 to 9, wherein the fixing pad (62) is mounted on the cap plate (31) in a state in which the insulating pad (61) is attached to the fixing pad (62).

12. A manufacturing method of a battery module (1), comprising:
coupling cases (20) and cap covers (30);
mounting the cases (20) on a housing (50); and
mounting damage prevention portions (60) on the cap covers (30) to prevent damage to the cap covers (30) due to heat.

13. The manufacturing method as claimed in claim 11, wherein in the mounting the damage prevention portions step, an insulating pad (61) covers a vent (37) formed in each of the cap covers (30), and
a fixing pad (62) covers the insulating pad (61) by being coupled to the cap cover (30).

14. The manufacturing method as claimed in claim 13, wherein the fixing pad (62) is separable from the insulating pad (61) by being cut by gas discharged from the vent (37).
